Europäisches Patentamt

European Patent Office

Office européen des brevets

(11) Veröffentlichungsnummer : **0 346 850 B1**

# (12) EUROPÄISCHE PATENTSCHRIFT

(45) Veröffentlichungstag der Patentschrift :
**23.08.95 Patentblatt 95/34**

(51) Int. Cl.$^6$ : **G01S 7/28**

(21) Anmeldenummer : **89110720.3**

(22) Anmeldetag : **13.06.89**

(54) **Empfangs-Kohärentes-Radarsystem.**

(30) Priorität : **16.06.88 DE 3820559**

(43) Veröffentlichungstag der Anmeldung :
**20.12.89 Patentblatt 89/51**

(45) Bekanntmachung des Hinweises auf die
Patenterteilung :
**23.08.95 Patentblatt 95/34**

(84) Benannte Vertragsstaaten :
**BE CH DE FR GB GR IT LI NL SE**

(56) Entgegenhaltungen :
**EP-A- 0 154 054**
**DE-B- 1 271 218**
**DE-B- 2 530 846**
**GB-A- 1 469 348**
**US-A- 3 166 721**
**US-A- 4 066 965**

(73) Patentinhaber : **SIEMENS
AKTIENGESELLSCHAFT
Wittelsbacherplatz 2
D-80333 München (DE)**
Patentinhaber : **SIEMENS-ALBIS
AKTIENGESELLSCHAFT
PV/Patente und Verträge
Postfach,
Albisriederstrasse 245
CH-8047 Zürich (CH)**

(72) Erfinder : **Vendt, Dieter, Dipl.-Ing.
Eschenstrasse 88
D-8044 Unterschleissheim (DE)**
Erfinder : **Wernli, Hans, Dipl.-Ing.
Bäumlisäckerstrasse 40
CH-8907 Wettswil (CH)**
Erfinder : **Fritschi, Hansrudolf
Bächerwiesstrasse 525
CH-8196 Wil-ZH (CH)**

EP 0 346 850 B1

## Beschreibung

Die Erfindung betrifft ein empfangskohärentes Radarsystem mit einem Sender und einem Empfänger, bei dem der ein Magnetron enthaltende Sender zur Erzeugung von Sendeimpulsen hoher Leistung getastet wird und zur Erzielung einer weitgehend konvergenten Startphasenlage der einzelnen Sendeimpulse über einen Zirkulator mit einem Injektionssignal beaufschlagt wird, dessen Frequenzlage von der Magnetronsendefrequenz um eine variable Differenzfrequenz abweicht und das zusammen mit dem Sender in der Weise getastet wird, daß die Impulswiederholungsfrequenz des Senders aus einem ganzzahligen Teilerverhältnis der Differenzfrequenz abgeleitet wird.

In Radaranlagen kommen zur Abstrahlung von Sendeimpulsen hoher Leistung vor allem Magnetrons zur Anwendung. Magnetrons haben die Eigenschaft, daß sie aus dem Röhrenrauschen heraus anschwingen, wodurch die Phasenlagen der einzelnen gesendeten Impulse einem Zufallsgesetz unterworfen sind. Es ist bekannt, die willkürliche Phasenlage eines jeden Sendeimpulses mittels eines kohärenten Oszillators über eine Empfangsperiode zu speichern, so daß die Phasen der reflektierten Echoimpulse damit verglichen werden können. Auf diese Weise kann im Radargerät eine Unterscheidung zwischen Fest- und Bewegtzielen erfolgen.

Echoimpulse, welche von Zielen jenseits der eindeutigen Reichweite des Radarsystems stammen, (d. h. Echoimpulse, die erst nach der Abstrahlung des nächsten Sendeimpulses im Empfänger ankommen) werden somit nicht mehr mit der Phase ihres eigentlichen vorangegangenen Sendeimpulses verglichen, womit eine Unterscheidung zwischen Fest- und Bewegtzielen nicht mehr erfolgen kann.

Um die Zufälligkeit der Phasenlage eines vom Magnetron gesendeten Impulses zu beherrschen, ist es weiterhin bekannt, ein Signal aus einer frequenzstabilen Oszillatoreinrichtung in die Resonanzkreise des Magnetrons zu injizieren, um das Röhrenrauschen aus der Phase, mit der die Oszillation normalerweise aufgebaut wird, im Sinne einer Synchronisation auszuschalten.

Aus EP-A-0 154 054 ist ein empfangskohärentes Radarsystem mit einem durch ein Magnetron gebildeten Sender und einem Empfänger bekannt. Der Sender wird dabei zur Erzeugung von Sendeimpulsen hoher Leistung getastet und zur Erzielung einer weitgehend konvergenten Startphasenlage der einzelnen Sendeimpulse über einen Zirkulator mit einem Injektionssignal beaufschlagt, dessen Frequenzlage von der Sendefrequenzlage des Magnetrons um eine variable Differenzfrequenz abweicht und das zusammen mit dem Sender in der Weise getastet wird, daß die Impulswiederholungsfrequenz des Senders aus einem ganzzahligen Teilerverhältnis der Differenzfrequenz abgeleitet wird. Zu diesem Zweck ist bei dem bekannten Radarsystem eine Steuereinheit für die Einstellung der Pulswiederholungsfrequenz vorgesehen, die einen Zähler enthält, der die positiven oder negativen Nulldurchgänge eines kontinuierlich arbeitenden Zwischenfrequenz-Oszillators zählt und bei jedem n-ten Nulldurchgang den PRF-Modulator startet. Die in diesem Zwischenfrequenz-Oszillator erzeugte Frequenz entspricht der einem Mischer entnommenen Differenzfrequenz zwischen der Sendefrequenz des Magnetrons und der Frequenz des stabilen Lokaloszillators, der außerdem noch das dem Zirkulator über einen Tastschalter zugeführte Injektionssignal mit der gleichen Frequenz bildet. Es wird eine gewisse Verbesserung der Startfähigkeit erreicht, indem die Startphase und deshalb auch die Phasenposition des zu sendenden Impulses beeinflußt wird. Da die Phasenbeziehung zwischen dem Beginn eines Impulses und dem Beginn des darauffolgenden Impulses von der verwendeten Impulswiederholungsfrequenz und der Magnetron-Senderfrequenz beeinflußt wird, erhält man je nach gewählten Betriebs und Systembedingungen eine mehr oder weniger gute Phasenkohärenz. Aus GB-A-1 469 348 ist zu entnehmen, daß das gewünschte "Injektionsphasenpriming" durch die Injektion eines kontinuierlichen Sinuswellensignals in die frequenzbestimmende Schaltung des gepulsten Oszillators, also in das Magnetron, erreicht wird, aber erst mit einer solchen Amplitude, die den Aufbau des Schaltungsrauschens unterbindet, das mit seinen unerwünschten Phasenlagen sonst phaseninkohärente Schwingungen während der Impulse des Magnetrons hervorrufen würde.

Die bekannten Anordnungen werden den Anforderungen im Hinblick auf eine optimale Phasenkohärenz unter Verwendung von Radarsystemen mit unterschiedlichen Impulsfolgen und Magnetronsendefrequenzen nur bedingt gerecht.

Der Erfindung liegt die Aufgabe zugrunde, bei einem Radarsystem unabhängig von der verwendeten Magnetronsendefrequenz für verschiedene Impulswiederholungsfrequenzen eine möglichst gute Kohärenz der Startphasenlage von Impuls zu Impuls zu gewährleisten. Dem kommt eine besondere Bedeutung vor allem für die Einsatzfähigkeit in den Fällen zu, bei denen Überreichweiten auftreten.

Diese Aufgabe wird erfindungsgemäß dadurch gelöst, daß im Übertragungsweg des Injektionssignals zum Zirkulator ein gemeinsam mit dem Sender getasteter Leistungsverstärker eingefügt ist, durch den das Injektionssignal in Abhängigkeit von der Magnetronsendefrequenz auf einen optimalen Wert verstärkt wird, und daß über den gleichen Zirkulator die Empfangssignale dem Empfänger zugeführt werden.

Durch das Einfügen des gemeinsam mit dem Sender getasteten Leistungsverstärkers in den Signalweg des in das Magnetron injizierten Signales kann dieses hinsichtlich seiner Injektionsleistung optimiert werden,

2

da die Güte der Phasenkohärenz eine Funktion der Injektionsleistung ist.

Da zusätzlich der Triggerzeitpunkt des Magnetrons aus dem ganzzahligen Teilerverhältnis der Differenzfrequenz von Magnetronsendefrequenz und Zündsignalfrequenz abgeleitet wird, ist es möglich, das Magnetron mit einer Anschwingphase zu starten, die für jeden Impuls dieselbe ist. Sowohl die erhöhte Injektionsleistung als auch die Festlegung des Triggerzeitpunktes für das Magnetron ermöglichen es, eine optimale Phasenkohärenz zu erzielen.

Weitere vorteilhafte Ausgestaltungen der Erfindung sind in den Unteransprüchen wiedergegeben.

Im Folgenden wird ein Ausführungsbeispiel der Erfindung anhand von Zeichnungen näher erläutert. Es zeigen

Fig. 1       ein Blockschaltbild eines Radarsystems nach der Erfindung

Fig. 2       ein Blockschaltbild eines getasteten Leistungsverstärkers zu einem Radarsystem nach der Erfindung.

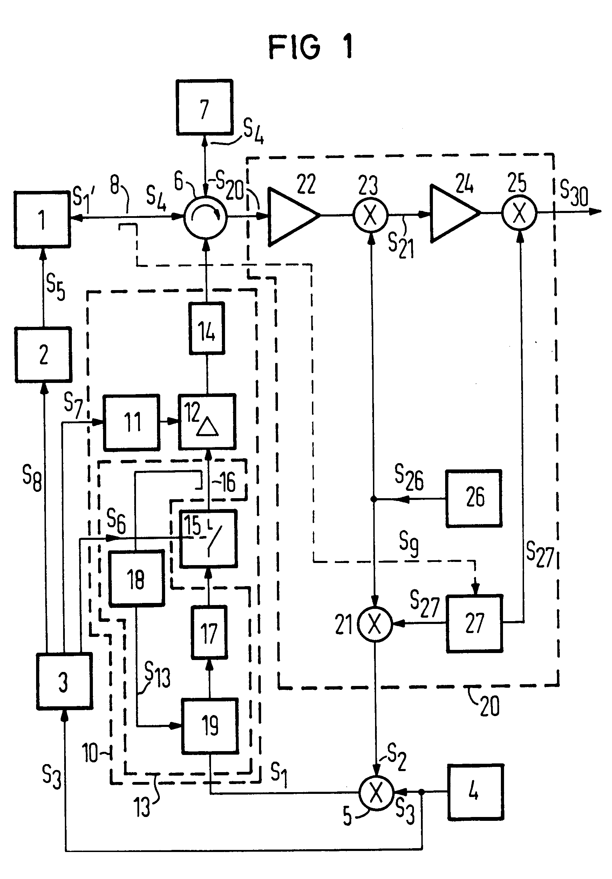

Im Radarsystem nach Fig. 1 ist ein Sender 1 (Magnetron) über einem Modulator 2 mit einer zentralen Steuereinheit 3 verbunden, die eingangsseitig an einen Offsetoszillator 4 angeschlossen ist. Das Ausgangssignal $S_1$ eines Mischers 5, der eingangsseitig mit einem Mischer 21 und dem Offsetoszillator 4 verbunden ist, wird dem Eingang eines getasteten Leistungsverstärkers 10 zugeführt, dessen Ausgang über einen Zirkulator 6 mit dem Sender 1 verbunden ist. Der Leistungsverstärker 10 ist durch einen von einer zeitgesteuerten Stromversorgungseinrichtung 11 gespeisten Wanderfeldverstärker 12 gebildet, der eingangsseitig an einen Leistungsregler 13 sowie ausgangsseitig an einen Isolator 14 angeschlossen ist. Zwischen dem Leistungsregler 13 und dem Eingang des Wanderfeldröhrenverstärkers 12 kann ein zeitgesteuerter Schalter 15 vorgesehen sein. Dieser Schalter 15 wie auch die Stromversorgungseinrichtung 11 sind mit der zentralen Steuereinrichtung 3 verbunden.

Die Empfangseinrichtung 20 ist eingangsseitig über den Zirkulator 6 mit einer Sende- und Empfangsantenne 7 verbunden, wobei das eingangsseitige Empfangssignal $S_{20}$ einer Reihenschaltung von Vorverstärker, Mischer 23, Zwischenfrequenzverstärker 24 und Mischer 25 zugeführt wird. Ein weiterer Eingang des Mischers 23, sowie ein Eingang des Mischers 21 sind an einen frequenzstabilen Oszillator 26 angeschlossen. Ein Zwischenfrequenzoszillator 27, der auch als kohärenter Oszillator ausgebildet sein kann, ist mit einem weiteren Eingang des Mischers 21 und 25 verbunden, wobei letzterer das Ausgangssignal $S_{30}$ liefert.

Das Radarsystem nach Fig. 1 funktioniert folgendermaßen: Im Mischer 21 der Empfangseinrichtung 20 wird ein frequenzstabiles Signal $S_2$ erzeugt dessen Frequenz $f_2$ der Magnetroneigenfrequenz entspricht. Durch Mischung des vom Offsetoszillator 4 gelieferten Signales $S_3$ mit dem Signal $S_2$ wird im Mischer 5 als Einseitenband das Injektionssignal $S_1$ erzeugt. Die Frequenz $f_1$ dieses Injektionssignales $S_1$ ist von der einstellbaren Offsetoszillatorfrequenz abhängig, deren Frequenzbereich $f_3$ von der Magnetronsendefrequenz abhängig ist. Werden beispielsweise Magnetrons für Frequenzen im X-Band verwendet, beträgt der einstellbare Differenzfrequenzbereich $f_3$ des Offsetoszillators 5 bis 10 MHz. Die Frequenz $f_1$ des Injektionssignales $S_1$ liegt somit vorteilhaft zwischen 5 und 10 MHz unter der Magnetronsendefrequenz. Dieses Injektionssignal $S_1$ mit einer Leistung von etwa -10 dBm wird im nachfolgenden Leistungsverstärker 10 in zwei Stufen verstärkt, vorerst in einem Halbleiterverstärker (in der Zeichnung nicht dargestellt), nachher in einem gittergetasteten Wanderfeldröhrenverstärker 12. Die dem Injektionssignal $S_1$ im Leistungsverstärker 10 erteilte Verstärkung ist von der verwendeten Magnetronsendefrequenz $f_4$ abhängig. Beispielsweise wird für Sendefrequenzen im X-Band das Injektionssignal $S_1$ auf eine Impulsspitzenleistung von 2 bis 3 kW verstärkt. Zur Konstanthaltung der Eingangsleistung ist ein dem Wanderfeldröhrenverstärker 12 vorgeschalteter Leistungsregler 13 vorgesehen.

Dazu wird im Leistungsregler 13 über einen Richtkoppler 16 das einen Attenuator 17 durchlaufende Injektionssignal $S_1$ entnommen und einem Regler 18 zugeführt. Durch die aufgrund der Regelabweichung ermittelte Stellgröße $S_{13}$ wird das Injektionssignal $S_1$ über ein Stellglied 19 derart beeinflußt, daß eine konstante Eingangsleistung für das Injektionssignal $S_1$ erhalten wird. Es ist aber möglich anstelle des Leistungsregler 13 einen Eingangsbegrenzer zu verwenden, der die Eingangsleistung des Injektionssignals $S_1$ auf einen konstanten Wert begrenzt.

Das im Leistungsverstärker 10 verstärkte Signal wird über den Zirkulator 6 in die Resonanzkreise des Magnetrons injiziert. Das vom Steuermodulator 2 durch kurze Spannungsimpulse $S_5$ gesteuerte Magnetron 1 erzeugt die hochfrequenten Sendeimpulse $S_4$, die über den Zirkulator zur kombinierten Sende- und Empfangsantenne 7 geleitet werden, wo deren Abstrahlung erfolgt. Die durch die gesendeten Sendeimpulse $S_4$ hervorgerufenen, von einem Objekt reflektierten Echoimpulse $S_{20}$ werden durch dieselbe Antenne 7 empfangen und über den Zirkulator 6 zur Empfangseinrichtung 20 weitergeleitet. In der Empfangseinrichtung 20 wird das Empfangssignal $S_{20}$ in an sich bekannter Weise weiter verarbeitet. Im Mischer 23 wird aus dem den Vorverstärker 22 durchlaufenden Echosignal $S_{20}$ das Zwischenfrequenzsignal $S_{21}$ erzeugt, dessen Frequenz $f_{21}$ gleich der Differenz zwischen der Sendefrequenz $f_4$ und der Frequenz $f_{26}$ der stabilen Osziallatoreinrichtung 26 ist. Das Zwischenfrequenzsignal $S_{21}$ wird über einen Zwischenfrequenzverstärker 24 dem Mischer 25 zugeführt, der

auch das Ausgangssignal $S_{22}$ von dem Zwischenfrequenzoszillator 27 erhält.

Es ist auch möglich anstelle des Zwischenfrequenzoszillators 27 einen kohärenten Oszillator zu verwenden, der dann von den über einen Richtkoppler 8 entnommenen Sendeimpulsen $S_9$ synchronisiert wird (in Figur 1 gestrichelt dargestellt).

Dabei arbeitet der Zwischenfrequenzoszillator 27 auf einer Frequenz $f_{27}$, die der Frequenz $f_{21}$ des Zwischenfrequenzsignales $S_{21}$ entspricht. Der Mischer 25 liefert somit ein Ausgangssignal $S_{30}$, das Videosignal genannt wird, das in bekannter Weise ausgewertet werden kann. Wird beispielsweise die Zwischenfrequenz $f_{27}$ des Zwischenfrequenzoszillators 27 zu 60 MHz gewählt, ergibt sich die Frequenz $f_{26}$ des stabilen Oszillators 26 aus der Magnetronsendefrequenz $f_4$ minus der Zwischenfrequenz $f_{27}$. Im Mischer 21 wird aus dem Zwischenfrequenzsignal $S_{27}$ und dem Signal $S_{26}$ des stabilen Oszillators das Summensignal $S_2$ erzeugt, dessen Frequenz der Magnetronsendefrequenz $f_4$ entspricht.

Um zu gewährleisten, daß die aufeinanderfolgenden Sendeimpulse $S_4$ des Magnetrons stets mit der selben Phase anschwingen werden nach der Erfindung folgende Schritte unternommen: Zum ersten wird das Injektionssignal $S_1$ durch den Leistungsverstärker 10 in Abhängigkeit von der Magnetronsendefrequenz $f_4$ auf einen optimalen Wert verstärkt und in das Magnetron 1 injiziert. Zum zweiten wird in der zentralen Steuereinrichtung 3 ein Triggersignal $S_8$ aus der variablen Differenzfrequenz $f_3$ des Offsetoszillators 4 abgeleitet. Ein für die Phasenkohärenz der Sendeimpulse $S_4$ definierter Triggerzeitpunkt wird dadurch erhalten, daß der Triggerzeitpunkt zu $n \times \dfrac{1}{f_3}$ gewählt wird, wobei n ganzzahlig ist.

Der Triggerzeitpunkt wird also aus einem ganzzahligen Teilerverhältnis der Differenzfrequenz $f_3$ bestimmt, wodurch dieser einen festen Phasenbezug zur Differenzfrequenz $f_3$ aufweist. Die Triggergenauigkeit bestimmt dabei die erzielbare Kohärenz, d. h. je kleiner $f_3$ gewählt wird, desto größer muß die Triggergenauigkeit des Magnetrons sein, um dieselbe Kohärenz zu erzielen. Ein optimales $f_3$ für X-Band-Magnetrons beträgt zwischen 5 und 10 MHz. Um die Stabilität des Gesamtsystemes und damit eine optimale Kohärenz der aufeinanderfolgenden Sendeimpulse $S_4$ zu gewährleisten, werden weitere Steuersignale $S_6$ und $S_7$ in der zentralen Steuereinrichtung 3 aus der Offsetoszillatorfrequenz abgeleitet. Die Stromversorgungseinrichtung 11, sowie der Schalter 15 werden über die Signale $S_7$ bzw. $S_6$ in Abhängigkeit vom Signal $S_3$ gesteuert, und zwar so, daß normalerweise keine Versorgungsspannung am Wanderfeldröhrenverstärker 12 anliegt und der Schalter 15 geöffnet ist. Erst unmittelbar vor dem durch das Signal $S_3$ bewirkten Start des Magnetrons 1, wird der Schalter 15 geschlossen und gleichzeitig der Wanderfeldröhrenverstärker 12 an seine Versorgungsspannung angelegt. Auf diese Weise wird im Startmoment des Magnetrons 1 das verstärkte Injektionssignal $S_1$ in die die Oszillation aufbauenden Räume des Magnetrons 1 injiziert und damit dem Sendeimpuls $S_4$ eine Startphasenlage aufgezwungen.

Vorteilhafterweise ist es auch möglich, den Leistungsverstärker 10 nachträglich in bereits vorhandene ohne Injektionszündung arbeitende Radarsysteme zu integrieren. Dabei wird dieser in der oben beschriebenen Weise in den Signalweg des Signales $S_1$ zum Zirkulator 6 eingeschleift. Die zur Zeitsteuerung des Schalters 15 und der Stromversorgungseinrichtung 11 benötigten Steuersignale werden dabei der vorhandenden zentralen Steuerung 3 entnommen.

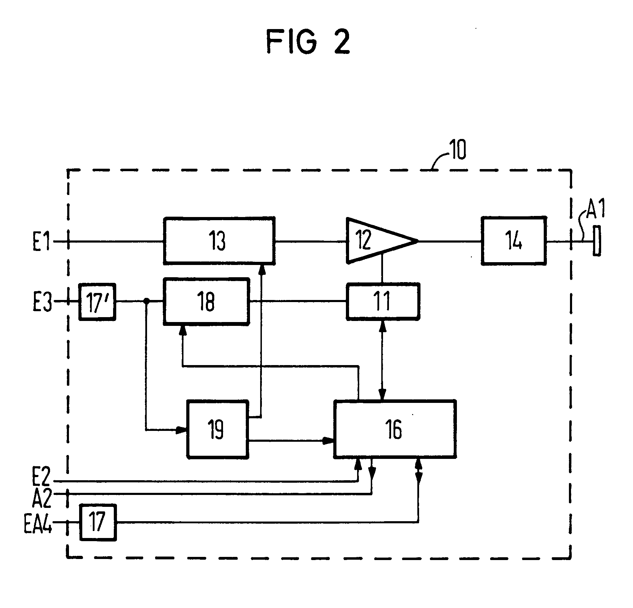

In Fig. 2 ist ein Ausführungsbeispiel eines Leistungsverstärkers 10 als Blockschaltbild nach der Erfindung dargestellt.

Ein Eingang E1 ist über die Reihenschaltung eines Leistungsreglers 13, eines Wanderfeldröhrenverstärkers 12 und eines Isolators 14 mit dem Ausgang A1 verbunden. Eine Steuer- und Überwachungseinrichtung 16 weist mehrere von außen zugängliche Anschlüsse auf, nämlich einen Eingang E2 und einen Ausgang A2 für das Impulswiederholungsfrequenzsignal, und einen Anschluß für über eine Filterbaugruppe 17 geführte Kontrollsignale. Sie ist des weiteren mit einer Spannungsversorgungseinrichtung 11 verbunden, die wiederum an den Wanderfeldröhrenverstärker 12 angeschlossen ist. Am Abgriff der Netzspannung ist ein Eingang E3 vorgesehen, dem eine Filterbaugruppe 17' nachgeschaltet ist, die die Netzspannung an eine Gleichrichterschaltung 18 und eine Kleinspannungsversorgungseinrichtung 19 verteilt, die ihrerseits sowohl die Steuer- und Überwachungseinrichtung 16 als auch den Eingangsbegrenzer 13 speist. Die Gleichrichterschaltung 18 ist mit der Spannungsversorgungseinrichtung 11 sowie mit der Steuer- und Überwachungseinrichtung 16 verbunden.

Der Leistungsverstärker nach Fig. 2 funktioniert folgendermaßen:

Das vom Mischer 5 gelieferte Injektionssignal $S_1$ (Fig. 1) gelangt über den Eingang E1 zum Leistungsregler 13. Dieser beinhaltet einen Halbleiterverstärker, der das Injektionssignal $S_1$ in einer ersten Stufe verstärkt, des weiteren sind Attenuatoren für die Pegelanpassung sowie Richtkoppler zur Konstanthaltung der Eingangsleistung vorgesehen. Nachfolgend wird das Zündsignal $S_1$ im Wanderfeldröhrenverstärker 12 auf den erforderlichen Leistungspegel angehoben. Das somit verstärkte Injektionssignal durchläuft einen Isolator 14 und einen Richtkoppler zur Überwachung der Ausgangsleistung, und gelangt zum Ausgang A1. Über den Eingang E3 und die Filterbaugruppe 17' wird aus der Netzspannung, deren Frequenz 50 oder 400 Hz betragen kann, in einer von der Steuer- und Überwachungseinrichtung 16 gesteuerten Gleichrichterschaltung 18 die Speisegleichspannung für den Wanderfeldröhrenverstärker 12 erzeugt. Die mit dieser Speisegleichspannung beaufschlagte, den Wanderfeldröhrenverstärker 12 speisende Spannungsversorgungseinrichtung 11 wird durch die Steuer- und Überwachungseinheit 16 geschaltet und überwacht, und zwar in Abhängigkeit von dem über den Eingang E2 ankommenden Impulswiederholungsfrequenzsignal. Dieses ist am Ausgang A2 für weitere Zwecke wieder verfügbar. Die Netzspannung wird nach der Filterbaugruppe 17' auch einer Kleinspannungsversorgungseinrichtung 19 zugeführt, die die notwendigen Betriebsspannungen für den Halbleiterverstärker im Eigangsbegrenzer 13 und der Steuer- und Überwachungseinrichtung 16 liefert Weitere Kontrollsignale können über den Anschluß EA4 über die Filterbaugruppe 17 der Steuer- und Überwachungseinrichtung 16 zugeführt bzw. entnommen werden.

**Patentansprüche**

1. Empfangskohärentes Radarsystem mit einem Sender (1) und einem Empfänger (20), bei dem der ein Magnetron enthaltende Sender (1) zur Erzeugung von Sendeimpulsen ($S_4$) hoher Leistung getastet wird und zur Erzielung einer weitgehend konvergenten Startphasenlage der einzelnen Sendeimpulse ($S_4$) über einen Zirkulator (6) mit einem Injektionssignal ($S_1$) beaufschlagt wird, dessen Frequenzlage von der Magnetronsendefrequenz ($f_4$) um eine variable Differenzfrequenz ($f_3$) abweicht und das zusammen mit dem Sender (1) in der Weise getastet wird, daß die Impulswiederholungsfrequenz des Senders (1) aus einem ganzzahligen Teilerverhältnis der Differenzfrequenz ($f_3$) abgeleitet wird,
   **dadurch gekennzeichnet**,
   daß im Übertragungsweg des Injektionssignals ($S_1$) zum Zirkulator (6) ein gemeinsam mit dem Sender (1) getasteter Leistungsverstärker (10) eingefügt ist, durch den das Injektionssignal in Abhängigkeit von der Magnetronsendefrequenz auf einen optimalen Wert verstärkt wird, und daß über den gleichen Zirkulator (6) die Empfangssignale ($S_{20}$) dem Empfänger (20) zugeführt werden.

2. Radarsystem nach Anspruch 1,
   **dadurch gekennzeichnet**, daß die Frequenz ($f_1$) des Injektionssignals ($S_1$) durch Differenzbildung aus der Magnetronsendefrequenz ($f_4$) und der aus einem Offsetoszillator (4) abgeleiteten Differenzfrequenz ($f_3$) erzeugt wird.

3. Radarsystem nach einem der vorhergehenden Ansprüche,
   **dadurch gekennzeichnet**, daß die Differenzfrequenz ($f_3$) des Offsetoszillators (4) bei einer Magnetronsendefrequenz ($f_4$) im X-Bandbereich zwischen 5 und 10 MHz gewählt wird.

4. Radarsystem nach einem der vorhergehenden Ansprüche,
   **dadurch gekennzeichnet**, daß die Verstärkung für die Injektionssignale ($S_1$) im Leistungsverstärker (10) so hoch gewählt ist, daß dessen Ausgangssignale ($S_4$) eine Spitzenleistung im kW-Bereich, insbesondere zwischen 2 und 3 kW aufweisen.

5. Radarsystem nach einem der vorhergehenden Assprüche,
   **dadurch gekennzeichnet**, daß der Leistungsverstärker (10) durch eine zeitgesteuerte Stromversorgungseinrichtung getastet wird.

6. Radarsystem nach einem der vorhergehenden Ansprüche,
   **dadurch gekennzeichnet**, daß eine zentrale Steuerung (3) vorgesehen ist, in der aus der Differenzfrequenz ($f_3$) des Offsetoszillators (4) die Impulswiederholungsfrequenz des Senders (1) und die Zeitsteuerung der Stromversorgungseinrichtung (11) bestimmt werden.

7. Radarsystem nach einem der vorhergehenden Ansprüche,
   **dadurch gekennzeichnet**, daß der Leistungsverstärker (10) ein Wanderfeldröhrenverstärker (12) ist, dessen Eingangsleistung über einen Leistungsregler (13) auf einen konstanten Wert geregelt wird.

8. Radarsystem nach einem der Ansprüche 1 bis 6,
   **dadurch gekennzeichnet**, daß der Leistungsverstärker (10) ein Wanderfeldröhrenverstärker ist, dem eingangsseitig ein Eingangsbegrenzer zur Konstanthaltung der Eingangsleistung vorgeschaltet ist.

9. Radarsystem nach einem der vorhergehenden Ansprüche, **dadurch gekennzeichnet**, daß in den Signalweg vor dem Wanderfeldröhrenverstärker (12) ein durch die zentrale Steuerung (3) zeitgesteuerter Schalter (15) eingefügt ist.

## Claims

1. Coherent reception radar system having a transmitter (1) and a receiver (20), in which system the transmitter (1), which contains a magnetron, is pulsed to produce transmission pulses ($S_4$) of high power and to which an injection signal ($S_1$) is applied via a circulator (6) in order to achieve a largely convergent initial phase of the individual transmission pulses ($S_4$), the frequency of which injection signal ($S_1$) differs from the magnetron transmission frequency ($f_4$) by a variable difference frequency ($f_3$) and which is pulsed together with the transmitter (1) in such a manner that the pulse repetition frequency of the transmitter (1) is derived from an integer division ratio of the difference frequency ($f_3$), characterized in that a power amplifier (10), which is pulsed together with the transmitter (1), is inserted in the transmission path of the injection signal ($S_1$) to the circulator (6), by means of which power amplifier (10) the injection signal is amplified to an optimum value as a function of the magnetron transmission frequency, and in that the received signals ($S_{20}$) are supplied to the receiver (20) via the same circulator (6).

2. Radar system according to Claim 1, characterized in that the frequency ($f_1$) of the injection signal ($S_1$) is produced by forming the difference between the magnetron transmission frequency ($f_4$) and the difference frequency ($f_3$) derived from an offset oscillator (4).

3. Radar system according to one of the preceding claims, characterized in that the difference frequency ($f_3$) of the offset oscillator (4) is selected to be between 5 and 10 MHz in the case of a magnetron transmission frequency ($f_4$) in the X-band range.

4. Radar system according to one of the preceding claims, characterized in that the gain for the injection signals ($S_1$) in the power amplifier (10) is selected to be so high that the output signals ($S_4$) of the latter have a peak power in the kW range, preferably between 2 and 3 kW.

5. Radar system according to one of the preceding claims, characterized in that the power amplifier (10) is pulsed by a time-controlled power supply device.

6. Radar system according to one of the preceding claims, characterized in that a central controller (3) is provided in which the pulse repetition frequency of the transmitter (1) and the time control of the power supply device (11) are determined from the difference frequency ($f_3$) of the offset oscillator (4).

7. Radar system according to one of the preceding claims, characterized in that the power amplifier (10) is a travelling wave tube amplifier (12) whose input power is regulated at a constant value via a power regulator (13).

8. Radar system according to one of Claims 1 to 6, characterized in that the power amplifier (10) is a travelling wave tube amplifier upstream of which, on the input side, an input limiter is connected in order to stabilize the input power.

9. Radar system according to one of the preceding claims, characterized in that a switch (15), which is time-controlled by the central controller (3), is inserted in the signal path upstream of the travelling wave tube amplifier (12).

## Revendications

1. Système radar à réception cohérente comportant un émetteur (1) et un récepteur (20), dans lequel l'émetteur (1) comportant un magnétron est manipulé pour produire des impulsions d'émission (S4) de grande puissance et, pour l'obtention d'une position de phase de départ dans une grande mesure convergente des impulsions d'émission ($S_4$), reçoit, par l'intermédiaire d'un circulateur (6), un signal d'injection ($S_1$), dont la position de fréquence diffère de la fréquence d'émission ($f_4$) du magnétron, d'une fréquence de

différence variable ($f_3$), et qui est manipulé conjointement avec l'émetteur (1), de telle sorte que la fréquence de récurrence des impulsions de l'émetteur (1) soit obtenue en divisant la fréquence de différence ($f_3$) par un nombre entier,
caractérisé par le fait
que dans le trajet de transmission du signal d'injection ($S_1$) aboutissant au circulateur (6) est inséré un amplificateur de puissance (10), qui est manipulé en commun avec l'émetteur (1) et par lequel le signal d'injection est amplifié à une valeur optimale en fonction de la fréquence d'émission du magnétron, et que les signaux de réception ($S_{20}$) sont envoyés au récepteur (20) par l'intermédiaire du même circulateur (6).

2. Système radar suivant la revendication 1, caractérisé par le fait que la fréquence ($f_1$) du signal d'injection ($S_1$) est produite par formation de la différence entre la fréquence d'émission ($f_4$) du magnétron et la fréquence de différence ($f_3$) obtenue à partir d'un oscillateur à offset (4).

3. Système radar suivant l'une des revendications précédentes, caractérisé par le fait que la fréquence de différence (f3) de l'oscillateur à offset (4) est choisie pour une fréquence d'émission ($f_4$) du magnétron dans la gamme de la bande X entre 5 et 10 MHz.

4. Système radar suivant l'une des revendications précédentes, caractérisé par le fait que l'amplification pour les signaux d'injection ($S_1$) dans l'amplificateur de puissance (10) est choisie suffisamment élevée pour que ses signaux de sortie (S4) aient une puissance de crête dans la gamme des kW, notamment entre 2 et 3 kW.

5. Système radar suivant l'une des revendications précédentes, caractérisé par le fait que l'amplificateur de puissance (10) est manipulé par un dispositif d'alimentation en courant à commande temporelle.

6. Système radar suivant l'une des revendications précédentes, caractérisé par le fait qu'il est prévu une unité de commande centrale (3), dans laquelle la fréquence de récurrence des impulsions de l'émetteur (1) et la commande temporelle du dispositif d'alimentation en courant (11) sont déterminées à partir de la fréquence de différence ($f_3$) de l'oscillateur à offset (4).

7. Système radar suivant l'une des revendications précédentes, caractérisé par le fait que l'amplificateur de puissance (10) est un amplificateur (12) à tube à ondes progressives, dont la puissance d'entrée est réglée à une valeur constante par l'intermédiaire d'un régulateur de puissance (13).

8. Système radar suivant l'une des revendications 1 à 6, caractérisé par le fait que l'amplificateur de puissance (10) est un amplificateur à tube à ondes progressives, en amont duquel est branché, côté entrée, un limiteur d'entrée servant à maintenir constante la puissance d'entrée.

9. Système radar suivant l'une des revendications précédentes, caractérisé par le fait qu'un interrupteur (15) commandé dans le temps par l'unité de commande centrale (3) est inséré dans la voie de transmission de signaux, en amont de l'amplificateur (12) à tube à ondes progressives.

# FIG 1

FIG 2